# EUROPÄISCHE PATENTANMELDUNG

(11) **EP 4 678 278 A1**
(43) Veröffentlichungstag der Anmeldung: **14.01.2026**
(21) Anmeldenummer: 24187161.5
(22) Anmeldetag: 08.07.2024
(51) Int. Cl.: B01F 33/00, B01F 35/10, F16J 15/00, B01F 35/30

(54) **RÜHRWERK INSBESONDERE TAUCH-RÜHRWERK**

(71) Anmelder: PTM GmbH, 06188 Landsberg (DE)
(72) Erfinder: ROSTALSKI, Kay, 06246 Bad Lauchstädt (DE); URBAN, Sasha, 06749 Bitterfeld-Wolfen (DE); KLATT, Detlef, 08396 Waldenburg (DE); BECKER, Michael, 49324 Melle (DE)
(74) Vertreter: Andrejewski - Honke Patent- und Rechtsanwälte Partnerschaft mbB

(57) **Zusammenfassung**

Gegenstand der Erfindung ist ein Rührwerk und insbesondere Tauch-Rührwerk sowie vorzugsweise Seiteneintritts-Tauch-Rührwerk als Bestandteil eines Fermenters einer Biogasanlage. Das Rührwerk ist in seinem grundsätzlichen Aufbau mit einer Rührwelle (3) mit wenigstens einem daran an ihrem einen Ende befestigten Rührwerkspropeller (4) ausgerüstet. Ferner mit einem Antrieb (5) für die Rührwelle (3) an ihrem anderen Ende. Außerdem ist ein die Rührwelle (3) unter Zwischenschaltung einer Gleitringdichtung (7) umgebenden sowie lagernden Flansch (2) vorgesehen. Erfindungsgemäß ist zusätzlich propellerseitig ein die Rührwelle (3) umschließender sowie die Gleitringdichtung (7) radial übergreifender Dichtungsring (8) realisiert, welcher wenigstens eine axial zum Flansch (2) beabstandete Betriebsstellung sowie eine Austauschstellung für die Gleitringdichtung (8) in Anlage am Flansch (2) aufweist.

## Beschreibung

Die Erfindung betrifft ein Rührwerk, insbesondere Tauch-Rührwerk, vorzugsweise Seiteneintritts-Tauch-Rührwerk als Bestandteil eines Fermenters einer Biogasanlage, mit einer Rührwelle mit wenigstens einem daran an ihrem einen Ende befestigten Rührwerkpropeller, ferner mit einem Antrieb für die Rührwelle an ihrem anderen Ende, und mit einem die Rührwelle unter Zwischenschaltung einer Gleitringdichtung umgebenden sowie lagernden Flansch.

Rührwerke werden überall dort eingesetzt, wo es darauf ankommt, eine fluide Stoffmischung in einen homogenen Zustand zu überführen. Zu diesem Zweck kann die Rührwelle mit einem, zwei oder noch mehr Rührwerkpropellern ausgerüstet werden. Bei Tauch-Rührwerken ist die Auslegung so getroffen, dass zumindest die Rührwelle mit dem Rührwerkpropeller in die fluide Stoffmischung eintaucht. Dabei kann grundsätzlich auch der Antrieb zusammen mit der Rührwelle und dem Rührwerkpropeller in der fluiden Stoffmischung vorhanden sein. Dann spricht man von einem Tauchmotor-Rührwerk.

Bei dem Tauch-Rührwerk der eingangs beschriebenen Ausführungsform handelt es sich im Wesentlichen um ein solches in sogenannter trockener Aufstellung. D. h., die Rührwelle mit dem wenigstens einen daran an ihrem einen Ende befestigten Rührwerkpropeller taucht ganz oder teilweise in die fluide Stoffmischung ein, wohingegen sich der Antrieb außerhalb der Stoffmischung befindet. Ein Seiteneintritts-Tauch-Rührwerk bezeichnet im Rahmen der Erfindung ein Tauch-Rührwerk, welches seitlich in einen die fluide Stoffmischung aufnehmenden Behälter eintritt und hier für die Homogenisierung der fluiden Stoffmischung im Innern sorgt. Die Rührwelle mit Rührwerkpropeller taucht dazu in die Stoffmischung ein, wohingegen der Antrieb wegen der trockenen Aufstellung außerhalb des Behälters angeordnet ist. So wird typischerweise bei Biogasanlagen vorgegangen. Hierauf ist die vorliegende Erfindung allerdings ausdrücklich nicht beschränkt.

Biogasanlagen werden bekanntermaßen zur Herstellung von Biogas aus pflanzlichen und tierischen Abfällen oder allgemein pflanzlichen oder tierischen Rohstoffen eingesetzt. Die fraglichen Abfälle oder Rohstoffe werden dazu in einem Fermenter vergärt. Bei den betreffenden Fermentern handelt es sich um große und durch Abdeckungen gasdicht verschlossene Behälter, in denen durch die Vergärung der genannten Stoffe Biogas (größtenteils Methan) gewonnen wird, welches seinerseits beispielsweise zum Heizen, zur Stromerzeugung oder zur weiteren Verarbeitung anschließend verwertet wird.

Um einen einwandfreien Betrieb des Fermenters und der darin stattfindenden Vergärung zu gewährleisten und eine durchgängige Erzeugung von Biogas sicherzustellen, werden die eingetragenen Stoffe im Fermenter und folglich die fluide Stoffmischung mit dem Rührwerk homogenisiert. Das ist für einen ungestörten Prozessablauf und eine gleichmäßige Erzeugung von Biogas erforderlich. In diesem Zusammenhang kommen üblicherweise Tauch-Rührwerke zum Einsatz, also solche, bei denen der Rührwerkpropeller inklusive Rührwelle in das zu rührende flüssige Stoffgemisch mehr oder minder vollständig eintaucht. Dadurch muss das Stoffgemisch nach außen hin abgedichtet werden, auch um die erforderliche gasdichte Auslegung des Fermenters sicherzustellen.

Zu diesem Zweck wird die Rührwelle in dem sie lagernden Flansch unter Zwischenschaltung der Gleitringdichtung aufgenommen. Der Flansch kann seinerseits seitlich im oder am Behälter des Fermenters befestigt werden, so dass an dieser Stelle typischerweise aber nicht einschränkend Seiteneintritts-Tauch-Rührwerke zum Einsatz kommen. Diese Seiteneintritts-Tauch-Rührwerke sind mit dem Vorteil ausgerüstet, dass der Antrieb außerhalb des Behälters angeordnet ist und somit zugänglich für etwaige Wartungsarbeiten zur Verfügung steht. Lediglich die Rührwelle mit dem daran befestigten Rührwerkpropeller wird gasdicht durch die Gleitringdichtung ins Innere des Fermenters geführt. Solche Seiteneintritts-Tauch-Rührwerke sind in der Regel fest in einer Behälterwand verbaut.

Beim gattungsbildenden Stand der Technik entsprechend der DE 10 2021 109 856 A1 wird zu diesem Zweck so vorgegangen, dass das an dieser Stelle beschriebene Seiteneintritts-Rührwerk einen Rührwerk-Winkelverstellmechanismus aufweist. Auf diese Weise kann eine Winkeleinstellung der Achse der Rührwelle vorgenommen werden. Dadurch soll insgesamt die Wirtschaftlichkeit einer mit dem betreffenden Rührwerk ausgerüsteten Biogasanlage erhöht und der Aufwand für ihren Betrieb reduziert werden.

Der Stand der Technik hat sich grundsätzlich bewährt, stößt allerdings dann an Grenzen, wenn bei beispielsweise einer Leckage der Gleitringdichtung ihr Austausch erforderlich ist. Eine solche Leckage muss einerseits verhindert werden, um einen Austritt des im Allgemeinen flüssigen Stoffgemisches im Innern des Fermenters zu verhindern. Andererseits und wesentlich führt eine solche Leckage zu Verlust an Biogas und reduziert damit die Wirtschaftlichkeit empfindlich. Aus diesem Grund muss die Dichtigkeit der Gleitringdichtung sichergestellt werden und im Falle einer Leckage ein zügiger Austausch erfolgen. Hierzu sind bisher umfangreiche Demontagearbeiten erforderlich, die meistens so vorgenommen werden, dass der Flansch inklusive Rührwelle und Rührwerkpropeller von der Behälterwand abgeschraubt und anschließend die Gleitringdichtung ersetzt wird. Darauffolgend ist dann ein ebenso aufwendiger Montagevorgang erforderlich. Das führt zu erhöhten Kosten und gegebenenfalls Produktionsausfall an Biogas, da das im Behälter bzw. Fermenter befindliche Biogas bei einem solchen Vorgang verloren geht bzw. zuvor abgesaugt werden muss. Hier will die Erfindung insgesamt Abhilfe schaffen.

Der Erfindung liegt das technische Problem zugrunde, ein derartiges Rührwerk und insbesondere Tauch-Rührwerk so weiterzuentwickeln, dass die Montage- und Demontagekosten beim Austausch der Gleitringdichtung gegenüber bisherigen Vorgehensweisen reduziert sind und ein etwaiger Verlust an Biogas auf ein Minimum beschränkt werden kann.

Zur Lösung dieser technischen Problemstellung schlägt die Erfindung bei einem gattungsgemäßen Rührwerk und insbesondere Tauch-Rührwerk vor, dass zusätzlich propellerseitig ein die Rührwelle umschließender sowie die Gleitringdichtung radial übergreifender Dichtungsring vorgesehen ist, welcher wenigstens eine axial zum Flansch beabstandete Betriebsstellung sowie eine Austauschstellung für die Gleitringdichtung in Anlage am Flansch aufweist. Der Flansch, die Gleitringdichtung und der Dichtungsring sind dabei allgemein rotationssymmetrisch im Vergleich zur zentralen Rührwelle ausgelegt.

Erfindungsgemäß wird also ein an sich bekanntes Rührwerk und insbesondere Tauch-Rührwerk mit Rührwelle, Rührwerkpropeller und Antrieb dahingehend aufgerüstet, dass zusätzlich propellerseitig der Dichtungsring vorgesehen ist. Das heißt, der Dichtungsring findet sich im Innern des Behälters bzw. Fermenters. Außerdem ist der Dichtungsring so ausgelegt, dass er die Gleitringdichtung radial übergreift, und zwar ausgehend von der zentral angeordneten Rührwelle. Eine vom Dichtungsring in seinem Innern gebildete Hohlkammer nimmt dabei die Gleitringdichtung auf bzw. deckt diese ab.

Dabei kann der Dichtungsring wenigstens zwei grundsätzlich voneinander zu unterscheidende Stellungen einnehmen. In der axial zum Flansch beabstandeten Betriebsstellung kommuniziert das Innere bzw. die Hohlkammer des Dichtungsringes und damit die vom Dichtungsring radial übergriffene Gleitringdichtung mit dem Innern des Behälters respektive Fermenters, so dass die Gleitringdichtung ihrer originären Funktion zur Abdichtung der Rührwelle nach außen hin - wie beschrieben - nachkommen kann. Die Gleitringdichtung mag dabei beispielhaft aus Siliziumcarbit gefertigt sein und verfügt im Regelfall über einzelne Gleitflächen, die mithilfe einer Feder aufeinander gepresst werden. Die jeweiligen Gleitringe sind dabei aus dem zuvor bereits angesprochenen Siliziumcarbit gefertigt. Das gilt selbstverständlich nur beispielhaft, weil es erfindungsgemäß auf die Ausprägung der Gleitringdichtung im konkreten Einzelfall nicht ankommt.

Nimmt dagegen der Dichtungsring die von der Betriebsstellung zu unterscheidende Austauschstellung für die Gleitringdichtung ein, so findet sich der Dichtungsringes in Anlage am Flansch und ist in dieser Austauschstellung das Innere des Dichtungsringes und damit seine Holkammer sowie die hierin befindliche Gleitringdichtung gegenüber dem Innern des Behälters abgedichtet. Dadurch kann in der Austauschstellung die Gleitringdichtung von außerhalb des Behälters entfernt werden. Das gelingt, und zwar ohne dass die Rührwelle inklusive Rührwerkspropeller demontiert werden müssten.

Vielmehr verbleiben die Rührwelle und der Rührwerkpropeller im Innern des Behälters respektive Fermenters. Für die Demontage der Gleitringdichtung ist es lediglich erforderlich, zunächst den Antrieb am Ende der Rührwelle zu entfernen. Da sich der Antrieb bei dem erfindungsgemäßen Rührwerk typischerweise außerhalb des Behälters befindet, ist dies problemlos und aufwandsarm möglich. Anschließend ist es dann nur noch erforderlich, den Dichtungsring von seiner axial zum Flansch beabstandeten Betriebsstellung in die Austauschstellung für die Gleitringdichtung in Anlage am Flansch zu überführen. Das wird im Regelfall dadurch vorgenommen, dass hierzu die Rührwelle axial beaufschlagt wird und hierbei den Dichtungsring entsprechend mitnimmt, wie dies nachfolgend noch näher erläutert wird. Eine hiermit verbundene geringfügige axiale Bewegung der Rührwelle kann dabei problemlos von der Antriebsseite her erfolgen, also im Bereich des Endes der Rührwelle, die außerhalb des Gehäuses frei zugänglich ist und nach Entfernen des Antriebes entsprechend manipuliert werden kann.

Jetzt kann die Gleitringdichtung bei in der Austauschstellung für die Gleitringdichtung in Anlage am Flansch befindlichen Dichtungsring ersetzt werden. Da der Dichtungsring in diesem Zusammenhang die Rührwelle - anstelle der Gleitringdichtung - nach außen hin abdichtet, lässt sich die Gleitringdichtung problemlos entnehmen und durch ein neues Exemplar ersetzen. Anschließend wird die Rührwelle axial bewegt und folglich der Dichtungsring wieder in die axial zum Flansch beabstandete Betriebsstellung überführt. In diesem Zustand kann zugleich die Dichtigkeit und Funktionsfähigkeit der neu eingesetzten Gleitringdichtung geprüft werden. Abschließend ist es lediglich noch erforderlich, den Antrieb auf das außerhalb des Gehäuses bzw. Fermenters befindliche Ende der Rührwelle aufzusetzen. Das heißt, sämtliche Montage- und Demontageschritte erfolgen erfindungsgemäß außerhalb des Fermenters bzw. des Behälters und während des gesamten Vorganges ist seine Dichtigkeit gewährleistet.

Als Folge hiervon ist mit einem etwaigen Austritt von im Innern des Fermenters befindlichem flüssigen Stoffgemisch ebenso wenig wie mit einem Austritt von Biogas zu rechnen, so dass im Rahmen der Erfindung etwaige Verluste minimiert und die Montage gegenüber bisherigen Vorgehensweisen erheblich vereinfacht wird. Außerdem wird erfindungsgemäß ein Öffnen des Behälters zum Austausch der Gleitringdichtung automatisch vermieden. Denn jedes Öffnen des Behälters ist problematisch sowie zeit- und kostenaufwändig. Hierin sind die wesentlichen Vorteile zu sehen.

Nach vorteilhafter Ausgestaltung wechselwirkt der Dichtungsring mit einem Ringanschlag an der Rührwelle, und zwar zumindest zur Einnahme seiner Austauschstellung. Das heißt, um den Dichtungsring von der Betriebsstellung in die Austauschstellung zu überführen, reicht es aus, wenn die Rührwelle axial geringfügig beaufschlagt wird. Denn bei diesem Vorgang wechselwirkt der Dichtungsring mit dem Ringanschlag an der Rührwelle, so dass bei diesem Vorgang der Dichtungsring in seine Austauschstellung überführt wird. Bei diesem Vorgang wird in der Regel auch die Gleitringdichtung zusammen mit dem Dichtungsring mitbewegt. Ein solcher "Freiweg" der Gleitringdichtung wird dabei vorteilhaft konstruktiv berücksichtigt. Nach Absolvieren des Axialweges des Dichtungsringes ausgehend von seiner Betriebsstellung in die Austauschstellung liegt der Dichtungsring am Flansch an und kommt es hier gleichsam zu einer Fahrt "auf Block", so dass die Austauschstellung problemlos und reproduzierbar eingenommen werden kann.

Der Dichtungsring ist im Allgemeinen im Querschnitt topfartig mit der von ihm umschlossenen Hohlkammer im Innern ausgebildet. Dazu verfügt der Dichtungsring meistens über einen die Rührwelle umschließenden Anschlagabschnitt und einen mit dem Flansch wechselwirkenden Anlageabschnitt. Der Anschlagabschnitt ist dazu im Allgemeinen mit einer von der Rührwelle durchgriffenen Hohlbohrung ausgerüstet. Außerdem verfügt der Anschlagabschnitt regelmäßig über einen Kragen, welcher die Gleitringdichtung bei der Einnahme der Austauschstellung des Dichtungsringes axial beaufschlagt. Das heißt, mithilfe des Kragens wird einerseits die Gleitringdichtung beaufschlagt und wechselwirkt andererseits der Ringanschlag an der Rührwelle mit dem Dichtungsring, um den Dichtungsring insgesamt von seiner Betriebsstellung in die Austauschstellung axial zu verfahren.

Dazu umschließt der Kragen die Hohlbohrung im Allgemeinen. Außerdem ist der Kragen vorteilhaft im Querschnitt stufenförmig ausgebildet. Dabei wechselwirkt eine erste Stufe des Kragens meistens mit dem Ringanschlag an der Rührwelle, und zwar zumindest zur Einnahme der Austauschstellung des Dichtungsringes. Eine zweite Stufe des Kragens umschließt die Rührwelle demgegenüber dichtend. Außerdem beaufschlagt die zweite Stufe des Kragens die Gleitringdichtung axial zur bzw. bei der Einnahme der Austauschstellung des Dichtungsringes.

Der Anlageabschnitt des Dichtungsringes ist größtenteils mit einem Anlageschenkel ausgerüstet. Der Anlageschenkel liegt in der Austauschstellung des Dichtungsringes (und meistens auch in der Betriebsstellung des Dichtungsringes) an einem Lagerring und insbesondere Kunststoffring respektive Kunststofflagerring an. Dieser Lagerring bzw. Kunststofflagerring dient zur Führung der Rührwelle und der hierauf befestigten Teile, also insbesondere des einen oder der mehreren Rührwerkpropeller. Mithilfe des Lagerrings können etwaige Schwingungen der Rührwelle reduziert oder gedämpft werden. Außerdem dient der Lagerring bzw. Kunststofflagerring gleichsam als Stützlager während der Arretierung der Rührwelle zum Austausch der Gleitringdichtung. Ferner werden hierdurch etwaige seitliche Bewegungen der Rührwelle begrenzt. Darüber hinaus ist der Anlageabschnitt meistens noch und zusätzlich mit einem radial vom Anlageschenkel beabstandeten Dichtungsschenkel ausgerüstet. Der Dichtungsschenkel nimmt seinerseits vorteilhaft eine Ringdichtung auf. Die Ringdichtung umschließt zu diesem Zweck einen hochstehenden Rundkragen des Flansches, und zwar dichtend. Der Rundkragen nimmt seinerseits im Innern die Gleitringdichtung und die Rührwelle auf.

Von besonderer Bedeutung ist dann noch der Umstand, dass der Anlageabschnitt einen Haltesteg zur Wechselwirkung mit einem Befestigungselement aufweist. Diese Wechselwirkung findet typischerweise bei in der Austauschstellung befindlichem Dichtungsring statt. Zu diesem Zweck ist das Befestigungselement im Flansch verfahrbar und hieran fixierbar gelagert. Meistens handelt es sich bei dem Befestigungselement schlicht und ergreifend um eine in eine Bohrung im Flansch eingreifende Halteschraube, die bei in der Austauschstellung befindlichem Dichtungsring den Haltesteg am Anlageabschnitt übergreift und somit den Dichtungsring in der eingenommenen Austauschstellung in Anlage am Flansch fixiert. Hierdurch wird zusätzlich auch die Position der Rührwelle in Axialrichtung gesichert. In dieser axial gesicherten Position verbleibt die Rührwelle inklusive Rührwerkpropeller im Innern des Behälters bzw. Fermenters und kann anschließend die Gleitringdichtung ausgetauscht werden, weil der in der Austauschstellung befindliche Dichtungsring - anstelle der Gleitringdichtung - für die Abdichtung des Behälterinneren nach außen hin sorgt.

Schließlich hat es sich bewährt, wenn der Dichtungsring mit einer ihn umgebenden Bürstenringdichtung ausgerüstet ist. Diese Bürstenringdichtung hält etwaige Fasern, Schwebstoffe und andere Feststoffe von der Gleitringdichtung zurück, so dass diese nicht in die Gleitringdichtung eindringen können. Im Bereich dieser Bürstenringdichtung respektive Gleitringdichtung können darüber hinaus vorteilhaft Bohrungen vorgesehen werden, die zum Zuführen von beispielsweise Frischwasser genutzt werden. Dadurch können die Gleitringdichtung, die vom Dichtungsring im Innern gebildete Hohlkammer und auch die Bürstenringdichtung im Bedarfsfall gespült werden, was sowohl in der Betriebsstellung des Dichtungsringes als auch grundsätzlich in der Austauschstellung des Dichtungsringes möglich ist.

Im Ergebnis wird ein Rührwerk und insbesondere Tauch-Rührwerk sowie vorzugsweise ein Seiteneintritts-Tauch-Rührwerk als Bestandteil eines Fermenters einer Biogasanlage zur Verfügung gestellt, welches einen dauerhaften und verlustfreien Betrieb sicherstellt. Denn der Austausch der die Rührwelle umschließenden Gleitringdichtung gelingt ohne Demontage der Rührwelle und des Rührwerkspropellers sowie in nach außen hin abgedichtetem Zustand des Fermenters durch den zusätzlich vorgesehenen Dichtungsring. Hierin sind die wesentlichen Vorteile zu sehen.

Nachfolgend wird die Erfindung anhand einer lediglich ein Ausführungsbeispiel darstellenden Zeichnung näher erläutert; es zeigen:
- Fig. 1: das Seiteneintritts-Tauch-Rührwerk in einer Übersicht,

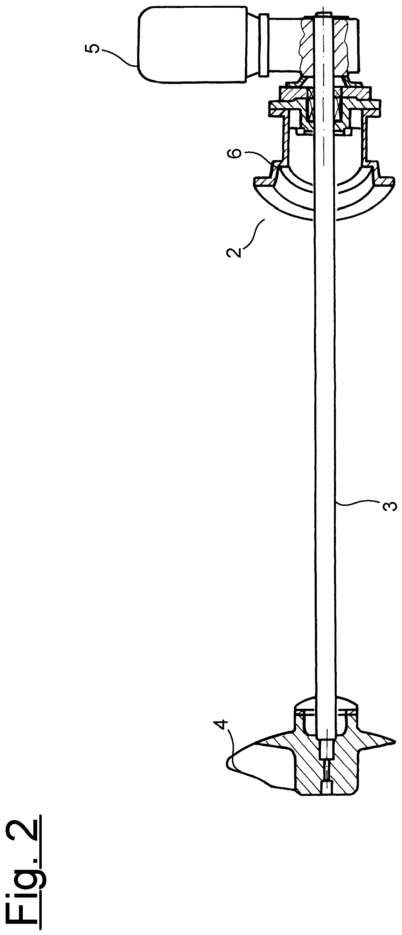

- Fig. 2: den Gegenstand nach Fig. 1 in einer teilweise geschnittenen Darstellung,

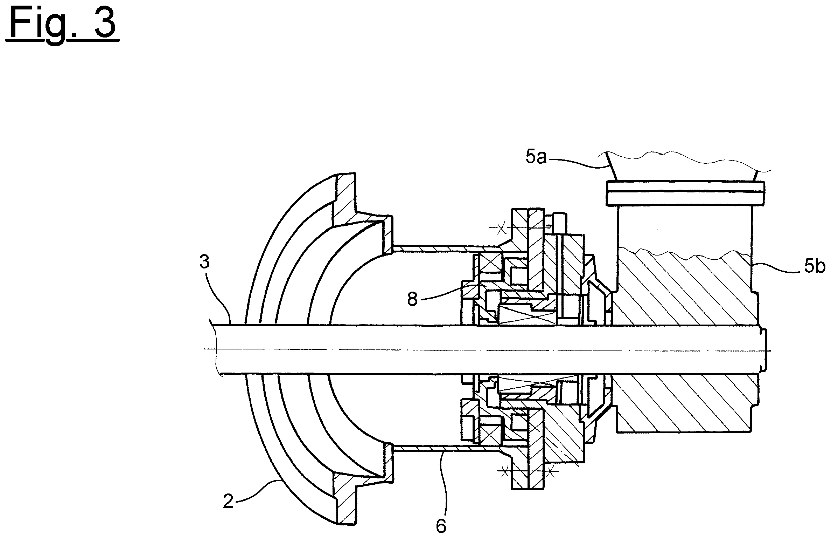

- Fig. 3: den Gegenstand nach Fig. 2 im Bereich der Gleitringdichtung im Schnitt und
- Fig. 4: einen nochmals vergrößerten Ausschnitt aus der Fig. 3 im Bereich der Gleitringdichtung.

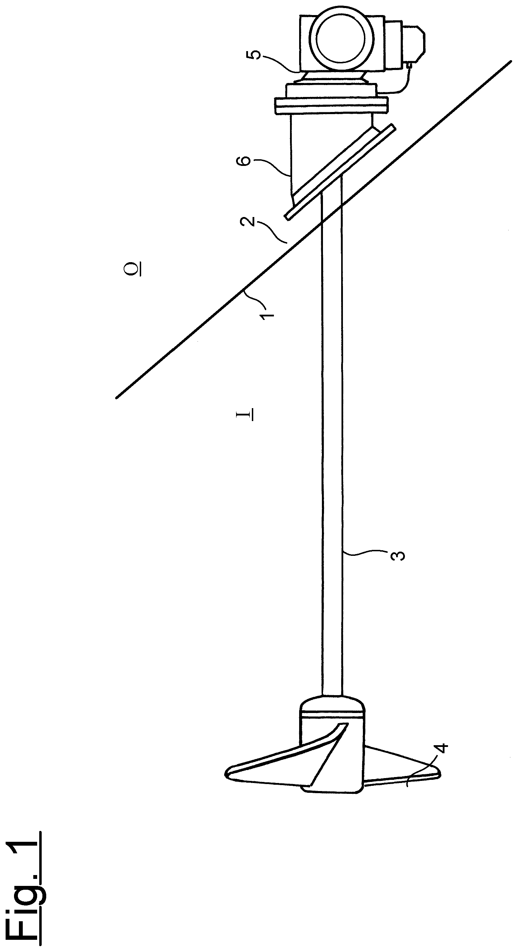

In den Figuren ist ein Rührwerk dargestellt, bei dem es sich nach dem Ausführungsbeispiel um ein Tauch-Rührwerk und konkret ein Seiteneintritts-Tauch-Rührwerk handelt. Das betreffende Rührwerk stellt dabei einen Bestandteil eines Fermenters bzw. Behälters einer Biogasanlage dar. Dazu ist in der Fig. 1 lediglich eine Behälterwand 1 dargestellt und man erkennt einen Flansch 2, mit dessen Hilfe das nachfolgend im Detail noch zu beschreibende Rührwerk in die Wand 1 eingebaut wird.

Das Rührwerk als solches verfügt über eine Rührwelle 3 mit wenigstens einem daran an ihrem einen Ende befestigten Rührwerkpropeller 4. Nach dem Ausführungsbeispiel sind zwei Rührwerkpropeller 4 realisiert, was selbstverständlich nur beispielhaft gilt. Die erforderliche Drehbewegung der Rührwelle 3 und damit des an ihrem einen Ende vorgesehenen Rührwerkpropellers 4 bzw. der beiden Rührwerkspropeller 4 wird mithilfe eines Antriebes 5 initiiert, welcher sich am anderen und dem Rührwerkpropeller 4 gegenüberliegenden Ende der Rührwelle 3 befindet. Anhand der Fig. 1 erkennt man, dass sich der Antrieb 5 inklusive einem an den Flansch 2 angeschlossenen Rohrstutzen 6 in einem Außenbereich O außerhalb des Behälters mit der Wand bzw. Behälterwand 1 befindet, wohingegen die Rührwelle 3 inklusive der beiden Rührwerkpropeller 4 im Innern bzw. Innenraum I angeordnet ist, welcher ein flüssiges Stoffgemisch zur Vergärung aufnimmt. Dazu ist der fragliche Behälter insgesamt geschlossen ausgebildet.

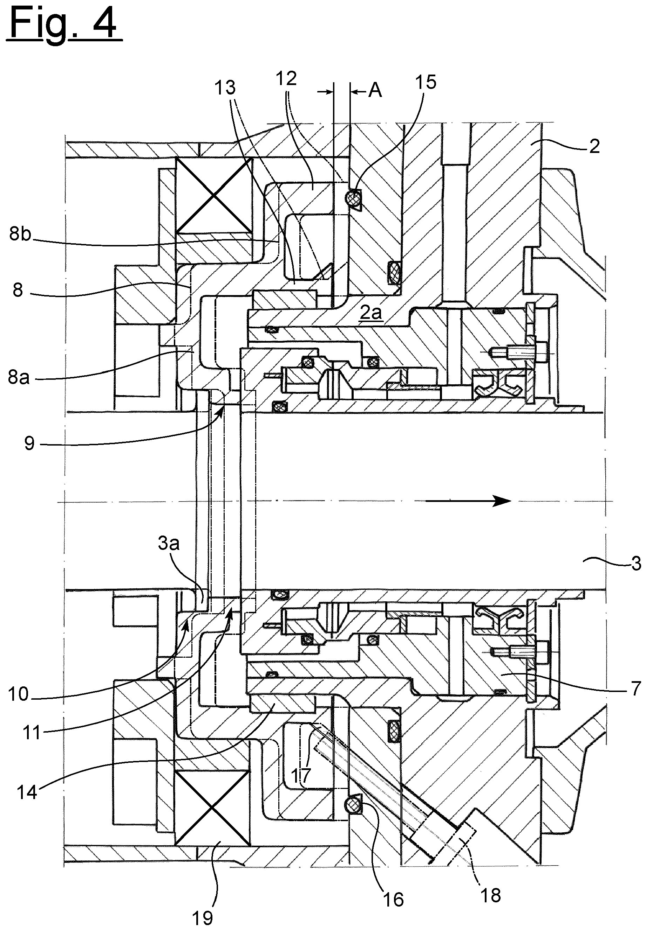

Der Antrieb 5 setzt sich nach dem Ausführungsbeispiel und nicht einschränkend aus einem Elektromotor 5a und einem diesem folgenden Getriebe 5b zusammen, die jeweils abnehmbar auf das dem Rührwerkpropeller 4 gegenüberliegenden Ende der Rührwelle 3 aufgesetzt bzw. an dieses angeschlossen sind. Für die Abdichtung der Rührwelle 3 gegenüber dem Flansch 2 sorgt im Wesentlichen eine Gleitringdichtung 7, welche die Rührwelle 3 zusammen mit dem die Rührwelle 3 lagernden Flansch 2 umgibt. Die Gleitringdichtung 7 ist nach dem Ausführungsbeispiel als sogenannte Dichtungspatrone ausgelegt. Das erkennt man insbesondere in der Fig. 4. Anhand dieser figürlichen Darstellung wird darüber hinaus deutlich, dass die Gleitringdichtung 7 die Rührwelle 3 abdichtet und ihrerseits gegenüber dem die Gleitringdichtung 7 aufnehmenden Flansch 2 für die erforderliche Dichtigkeit sorgt.

Etwaige Leckagen des Innenraumes I des Behälters können nun dazu führen, dass trotz der Gleitringdichtung 7 das im Innenraum I befindliche flüssige Stoffgemisch und/oder durch Vergärung erzeugte Biogas in den Außenraum O austritt. Um dies zu verhindern, muss die Gleitringdichtung 7 im Bedarfsfall ersetzt werden. Zu diesem Zweck ist erfindungsgemäß zusätzlich zu der Gleitringdichtung 7 propellerseitig ein die Rührwelle 3 umschließender sowie die Gleitringdichtung 7 radial übergreifender topfartiger Dichtungsring 8 vorgesehen. Der Dichtungsring 8, der Flansch 2 und die Gleitringdichtung 7 sind insgesamt rotationssymmetrisch zur zentral angeordneten Rührwelle 3 ausgelegt.

Tatsächlich kann dieser Dichtungsring 8 in wenigstens zwei unterschiedliche Positionen überführt werden. Dazu ist in der Fig. 4 eine Betriebsstellung des Dichtungsringes 8 durchgezogen dargestellt, welche zu einer axialen Beabstandung A des Dichtungsring im Vergleich zum Flansch 2 korrespondiert, wobei sich diese axiale Beabstandung A in dem in der Fig. 4 eingetragenen Axialabstand A manifestiert. Außerdem kann der Dichtungsring 8 zusätzlich eine strichpunktiert angedeutete Austauschstellung für die Gleitringdichtung 7 einnehmen, welche dazu korrespondiert, dass der Dichtungsring 8 unter Überwindung des Axialabstandes A am Flansch 2 anliegt. Das deutet ein entsprechender Pfeil an, welcher den Übergang von der Betriebsstellung zur Austauschstellung unter Überwindung des Axialabstandes A wiedergibt.

Um nun den Übergang von der durchgezogen dargestellten Betriebsstellung in die strichpunktiert wiedergegebene Austauschstellung zu realisieren, wechselwirkt der Dichtungsring 8 mit einem Ringanschlag 3a an der Rührwelle 3. Das wird nachfolgend noch näher erläutert. Man erkennt, dass zu diesem Zweck der Dichtungsring 8 im Querschnitt topfartig mit einem die Rührwelle 3 umschließenden Anschlagabschnitt 8a und einem mit dem Flansch 2 wechselwirkenden Anlageabschnitt 8b ausgebildet ist.

Dazu weist der Anschlagabschnitt 8a eine von der Rührwelle 3 durchgriffene Hohlbohrung 9 auf. Außerdem ist der Anschlagabschnitt 8a mit einem Kragen 10, 11 ausgerüstet, welcher die Gleitringdichtung 7 bei der Einnahme der Austauschstellung des Dichtungsringes 8 axial beaufschlagt. Der Kragen 10, 11. umschließt dabei die Hohlbohrung 9.

Außerdem erkennt man, dass der Kragen 10, 11 im Querschnitt stufenförmig ausgebildet ist. Tatsächlich ist eine erste Stufe 10 des Kragens 10, 11 vorgesehen, welche mit dem Ringanschlag 3a der Rührwelle 3 zumindest zur Einnahme der Austauschstellung des Dichtungsringes 8 wechselwirkt. Dazu übergreift der fragliche Ringanschlag 3a die erste Stufe 10 und schlägt an einer zweiten Stufe 11 des Kragens 10, 11 an. Das hat zur Folge, dass zur Einnahme der Austauschstellung seitens des Dichtungsringes 8 die Rührwelle 3 lediglich in der Darstellung nach der Fig. 4 entsprechend dem dort angedeuteten Pfeil "geringfügig nach rechts" bewegt werden muss. Denn bei diesem Verfahrvorgang der Rührwelle 3 sorgt der Ringanschlag 3a dafür, dass durch seine Anlage an der zweiten Stufe 11 des Kragens 10, 11 und sein Übergreifen der ersten Stufe 10 der fragliche Kragen 10, 11 und damit der Dichtungsring 8 insgesamt mitgenommen wird, um den Axialabstand A zu überwinden.

Die zweite Stufe 11 des Kragens 10, 11 umschließt die Rührwelle 3 dichtend. Außerdem beaufschlagt die zweite Stufe 11 des Kragens 10, 11 die Gleitringdichtung 7 bei der Einnahme der Austauschstellung seitens des Dichtungsringes 8, und zwar axial. Das heißt, sobald die Rührwelle 3 bei abgenommenem Antrieb 5 ausgehend vom Außenraum O in der Pfeilrichtung gemäß der Fig. 4 beispielsweise ziehend beaufschlagt wird, sorgt die Wechselwirkung zwischen dem Ringanschlag 3a der Rührwelle 3 mit dem Kragen 10, 11 dafür, dass der Axialbewegung der Rührwelle 3 auch der Dichtungsring 8 sowie die Gleitringdichtung 7 unter Überwindung des Axialabstandes A folgen. Diese Bewegung wird dadurch begrenzt, dass nach Überwinden des Axialabstandes A der Dichtungsringes 8 am Flansch 2 anliegt.

Zu diesem Zweck ist der Anlageabschnitt 8b des Dichtungsringes 8 mit einem Anlageschenkel 12 ausgerüstet, welcher in der Austauschstellung des Dichtungsringes 8 an einer Runddichtung 15 am Flansch 2 anliegt. Dazu wird die Runddichtung 15 in einer entsprechend ausgebildeten Ringnut 16 im Flansch 2 aufgenommen.

Der Anlageabschnitt 8b des Dichtungsringes 8 weist darüber hinaus und zusätzlich zu dem Anlageschenkel 12 einen hiervon radial beabstandeten Dichtungsschenkel 13 auf. Tatsächlich findet sich dieser Dichtungsschenkel 13 radial innenseitig in Bezug auf den Anlageschenkel 12 und ausgehend von der Rührwelle 3 als Mittelpunkt bzw. Zentrum. Der fragliche Dichtungsschenkel 13 nimmt seinerseits einen Lagerring und insbesondere Kunststofflagering 14 auf. Der Lagerring bzw. Kunststofflagerring 14 fungiert in gewisser Weise als Dichtung, wird größtenteils aber zur Führung und Lagerung der Rührwelle 3 und der darauf befestigten Teile und insbesondere des Rührwerkpropellers 2 genutzt. Außerdem sorgt der Lagerring bzw. Kunststofflagerring 14 für eine Dämpfung etwaiger Bewegungen der Rührwelle 3. Schließlich wird hierdurch eine mögliche seitliche Bewegung der Rührwelle 3 vermieden, wenn diese zum Austausch der Gleitringdichtung 7 fixiert ist wie nachfolgend noch näher erläutert wird.

Die etwaige Dichtungswirkung des Lagerrings bzw. Kunststofflagerrings 14 manifestiert sich dahingehend, dass der betreffende Kunststofflagerring 14 zusammen mit der bereits angesprochenen Runddichtung 15 eine im Innern des Dichtungsringes 8 vorhandene Hohlkammer in der Austauschstellung für die Gleitringdichtung 7 sowohl zur Rührwelle 3 als auch zum Außenraum O abdichtet. Der fragliche Kunststofflagerring 14 umschließt dabei einen hochstehenden Rundkragen 2a des Flansches 2, und zwar dichtend. Der Rundkragen 2a des Flansches 2 nimmt seinerseits in seinem Innern die Gleitringdichtung 7 und die Rührwelle 3 auf.

Der Anlageabschnitt 8b des Dichtungsringes 8 ist schließlich noch mit einem Haltesteg 17 ausgerüstet. Der Haltesteg 17 dient zur Wechselwirkung mit einem Befestigungselement 18, und zwar bei in der Austauschstellung befindlichem Dichtungsring 8. Bei dem Befestigungselement 18 handelt es sich nach dem Ausführungsbeispiel um eine in einem Gewinde verankerte Halteschraube 18, die gegenüber dem Gewinde im Flansch 2 ein- und ausgeschraubt werden kann. Dadurch kann die Halteschraube bzw. das Befestigungselement 18 bei in der Austauschstellung befindlichem Dichtungsring 8 den Dichtungsring 8 gegenüber dem Flansch 2 in Anlage fixieren. Außerdem wird hierdurch die Rührwelle 3 axial gesichert.

Im Betrieb und bei in Betriebsstellung befindlichem Dichtungsring 8 (durchgezogen dargestellt) ist die Hohlkammer im Innern des Dichtungsringes 8 zum Innenraum I hin offen und kann folglich das im Innenraum I befindliche flüssige Stoffgemisch bis zur Gleitringdichtung 7 vordringen. Eine an dieser Stelle zusätzlich vorgesehene und den Dichtungsring 8 umschließende Bürstenringdichtung 19 sorgt in diesem Zusammenhang dafür, dass etwaige im Innenraum I vorhandene Fasern oder Feststoffe nicht bis in den Bereich der Gleitringdichtung 7 gelangen können. Wenn nun ausgehend von dieser durchgezogen dargestellten Betriebsstellung die Gleitringdichtung 7 ausgetauscht werden soll, setzt dies zunächst voraus, dass der Dichtungsring 8 den Axialabstand A überwindet und in die strichpunktiert wiedergegebene Austauschstellung übergeht. Hierzu korrespondiert, dass die Rührwelle 3 axial in der Pfeilrichtung nach der Fig. 4 beaufschlagt wird. In der Austauschstellung des Dichtungsringes 8 ist die im Innern des Dichtungsringes 8 vorhandene Hohlkammer und auch die Gleitringdichtung 7 vom Außenraum O her zugänglich.

Bei diesem Vorgang nimmt die Rührwelle 3 über ihren Ringanschlag 3a unter Wechselwirkung mit dem Kragen 10, 11 den Ringanschlag 8 mit, so dass am Ende dieser Bewegung der Anlageschenkel 12 an der Runddichtung 15 im Innern des Flansches 2 dichtend anliegt. Dadurch drückt insgesamt der Dichtungsring 8 auf die Runddichtung 15 und ist in dieser Position fixiert. Hierfür sorgt der Haltesteg 17, welcher mithilfe des Befestigungselements 18 fixiert wird. Auf diese Weise ist der Hohlraum bzw. die Hohlkammer im Inneren des Dichtungsrings 8 zum Innenraum I hin geschlossen sowie zum Außenraum O hin offen und die in der Hohlkammer befindliche Gleitringdichtung 7 kann getauscht werden. D. h., in der beschriebenen Austauschstellung des Dichtungsringes 8 kann nun die Gleitringdichtung 7 entfernt und ersetzt werden, weil der Dichtungsring 8 für die erforderliche Abdichtung des Innenraumes I gegenüber dem Außenraum O sorgt. Das setzt zunächst voraus, dass der Antrieb 5 von der Rührwelle 3 entfernt worden ist.

Nach dem Wiedereinbau der ausgetauschten Gleitringdichtung 7 kann der Dichtungsring 8 ausgehend von seiner strichpunktiert dargestellten Austauschstellung in die durchgezogen wiedergegebene Betriebsstellung überführt werden. Dadurch lässt sich zugleich die Dichtigkeit der neu eingebauten Gleitringdichtung 7 überprüfen. Anschließend wird der Antrieb 5 auf das freie Ende der Rührwelle 3 aufgesetzt und ist das Rührwerk unmittelbar wieder betriebsfertig.

## Patentansprüche

1. Rührwerk, insbesondere Tauch-Rührwerk, vorzugsweise Seiteneintritts-Tauch-Rührwerk als Bestandteil eines Fermenters einer Biogasanlage, mit einer Rührwelle (3) mit wenigstens einem daran an ihrem einen Ende befestigten Rührwerkpropeller (4), ferner mit einem Antrieb (5) für die Rührwelle (3) an ihrem anderen Ende, und mit einem die Rührwelle (3) unter Zwischenschaltung einer Gleitringdichtung (7) umgebenden sowie lagernden Flansch (2),
**dadurch gekennzeichnet, dass**
zusätzlich propellerseitig ein die Rührwelle (3) umschließender sowie die Gleitringdichtung (7) radial übergreifender Dichtungsring (8) vorgesehen ist, welcher wenigstens eine axial zum Flansch (2) beabstandete Betriebsstellung sowie eine Austauschstellung für die Gleitringdichtung (7) in Anlage am Flansch (2) aufweist.

2. Rührwerk nach Anspruch 1, **dadurch gekennzeichnet, dass** der Dichtungsring (8) mit einem Ringanschlag (3a) an der Rührwelle (3) zumindest zur Einnahme seiner Austauschstellung wechselwirkt.

3. Rührwerk nach Anspruch 2, **dadurch gekennzeichnet, dass** der Dichtungsring (8) im Querschnitt topfartig mit einem die Rührwelle (3) umschließenden Anschlagabschnitt (8a) und einem mit dem Flansch (2) wechselwirkenden Anlageabschnitt (8b) ausgebildet ist.

4. Rührwerk nach Anspruch 3, **dadurch gekennzeichnet, dass** der Anschlagabschnitt (8a) eine von der Rührwelle (3) durchgriffene Hohlbohrung (9) aufweist.

5. Rührwerk nach Anspruch 3 oder 4, **dadurch gekennzeichnet, dass** der Anschlagabschnitt (8a) mit einem Kragen (10, 11) ausgerüstet ist, welcher die Gleitringdichtung (7) bei der Einnahme der Austauschstellung des Dichtungsringes (8) axial beaufschlagt.

6. Rührwerk nach Anspruch 5, **dadurch gekennzeichnet, dass** der Kragen (10, 11) die Hohlbohrung (9) umschließt.

7. Rührwerk nach Anspruch 5 oder 6, **dadurch gekennzeichnet, dass** der Kragen (10, 11) im Querschnitt stufenförmig ausgebildet ist.

8. Rührwerk nach Anspruch 7, **dadurch gekennzeichnet, dass** eine erste Stufe (10) des Kragens (10, 11) mit dem Ringanschlag (3a) an der Rührwelle (3) zumindest zur Einnahme der Austauschstellung des Dichtungsringes (8) wechselwirkt.

9. Rührwerk nach Anspruch 7 oder 8, **dadurch gekennzeichnet, dass** eine zweite Stufe (11) des Kragens (10, 11) die Rührwelle (3) dichtend umschließt sowie die Gleitringdichtung (7) bei der Einnahme der Austauschstellung des Dichtungsringes (8) axial beaufschlagt.

10. Rührwerk nach einem der Ansprüche 3 bis 9, **dadurch gekennzeichnet, dass** der Anlageabschnitt (8b) einen Anlageschenkel (12) aufweist, welcher in der Austauschstellung des Dichtungsringes (8) an einer Runddichtung (15) im Flansch (2) anliegt.

11. Rührwerk nach Anspruch 10, **dadurch gekennzeichnet, dass** der Anlageabschnitt (8b) zusätzlich einen radial vom Anlageschenkel (12) beabstandeten Dichtungsschenkel (13) aufweist, welcher mit einem Lagerring (14), insbesondere Kunststofflagerring (14), ausgerüstet ist.

12. Rührwerk nach Anspruch 11, **dadurch gekennzeichnet, dass** der Lagerring (14) einen hochstehenden Rundkragen (2a) des Flansches (2) vorzugsweise dichtend umschließt, wobei der Rundkragen (2a) seinerseits die Gleitringdichtung (7) und die Rührwelle (3) in seinem Innern aufnimmt.

13. Rührwerk nach einem der Ansprüche 3 bis 12, **dadurch gekennzeichnet, dass** der Anlageabschnitt (8b) einen Haltesteg (17) zur Wechselwirkung mit einem Befestigungselement (18) bei in der Austauschstellung befindlichem Dichtungsring (8) aufweist.

14. Rührwerk nach Anspruch 13, **dadurch gekennzeichnet, dass** das Befestigungselement (18) im Flansch (2) verfahrbar gelagert ist.

15. Rührwerk nach einem der Ansprüche 1 bis 14, **dadurch gekennzeichnet, dass** der Dichtungsring (8) mit einer ihm umgebenden Bürstenringdichtung (19) ausgerüstet ist.

## Geänderte Patentansprüche

### Geänderte Patentansprüche gemäss Regel 137(2) EPÜ.

1. Rührwerk, insbesondere Tauch-Rührwerk, vorzugsweise Seiteneintritts-Tauch-Rührwerk als Bestandteil eines Fermenters einer Biogasanlage, mit einer Rührwelle (3) mit wenigstens einem daran an ihrem einen Ende befestigten Rührwerkpropeller (4), ferner mit einem Antrieb (5) für die Rührwelle (3) an ihrem anderen Ende, und mit einem die Rührwelle (3) unter Zwischenschaltung einer Gleitringdichtung (7) umgebenden sowie lagernden Flansch (2), wobei
zusätzlich propellerseitig ein die Rührwelle (3) umschließender sowie die Gleitringdichtung (7) radial übergreifender Dichtungsring (8) vorgesehen ist, welcher wenigstens eine axial zum Flansch (2) beabstandete Betriebsstellung sowie eine Austauschstellung für die Gleitringdichtung (7) in Anlage am Flansch (2) aufweist, wobei ferner
der Dichtungsring (8) mit einem Ringanschlag (3a) an der Rührwelle (3) zumindest zur Einnahme seiner Austauschstellung wechselwirkt, und wobei
der Dichtungsring (8) im Querschnitt topfartig mit einem die Rührwelle (3) umschließenden Anschlagabschnitt (8a) und einem mit dem Flansch (2) wechselwirkenden Anlageabschnitt (8b) ausgebildet ist,
**dadurch gekennzeichnet, dass**
der Anschlagabschnitt (8a) mit einem Kragen (10, 11) ausgerüstet ist, welcher die Gleitringdichtung (7) bei der Einnahme der Austauschstellung des Dichtungsringes (8) axial beaufschlagt.

2. Rührwerk nach Anspruch 1, **dadurch gekennzeichnet, dass** der Anschlagabschnitt (8a) eine von der Rührwelle (3) durchgriffene Hohlbohrung (9) aufweist.

3. Rührwerk nach Anspruch 1 oder 2, **dadurch gekennzeichnet, dass** der Kragen (10, 11) die Hohlbohrung (9) umschließt.

4. Rührwerk nach einem der Ansprüche 1 bis 3, **dadurch gekennzeichnet, dass** der Kragen (10, 11) im Querschnitt stufenförmig ausgebildet ist.

5. Rührwerk nach Anspruch 4, **dadurch gekennzeichnet, dass** eine erste Stufe (10) des Kragens (10, 11) mit dem Ringanschlag (3a) an der Rührwelle (3) zumindest zur Einnahme der Austauschstellung des Dichtungsringes (8) wechselwirkt.

6. Rührwerk nach Anspruch 4 oder 5, **dadurch gekennzeichnet, dass** eine zweite Stufe (11) des Kragens (10, 11) die Rührwelle (3) dichtend umschließt sowie die Gleitringdichtung (7) bei der Einnahme der Austauschstellung des Dichtungsringes (8) axial beaufschlagt.

7. Rührwerk nach einem der Ansprüche 1 bis 6, **dadurch gekennzeichnet, dass** der Anlageabschnitt (8b) einen Anlageschenkel (12) aufweist, welcher in der Austauschstellung des Dichtungsringes (8) an einer Runddichtung (15) im Flansch (2) anliegt.

8. Rührwerk nach Anspruch 7, **dadurch gekennzeichnet, dass** der Anlageabschnitt (8b) zusätzlich einen radial vom Anlageschenkel (12) beabstandeten Dichtungsschenkel (13) aufweist, welcher mit einem Lagerring (14), insbesondere Kunststofflagerring (14), ausgerüstet ist.

9. Rührwerk nach Anspruch 8, **dadurch gekennzeichnet, dass** der Lagerring (14) einen hochstehenden Rundkragen (2a) des Flansches (2) vorzugsweise dichtend umschließt, wobei der Rundkragen (2a) seinerseits die Gleitringdichtung (7) und die Rührwelle (3) in seinem Innern aufnimmt.

10. Rührwerk nach einem der Ansprüche 1 bis 9, **dadurch gekennzeichnet, dass** der Anlageabschnitt (8b) einen Haltesteg (17) zur Wechselwirkung mit einem Befestigungselement (18) bei in der Austauschstellung befindlichem Dichtungsring (8) aufweist.

11. Rührwerk nach Anspruch 10, **dadurch gekennzeichnet, dass** das Befestigungselement (18) im Flansch (2) verfahrbar gelagert ist.

12. Rührwerk nach einem der Ansprüche 1 bis 11, **dadurch gekennzeichnet, dass** der Dichtungsring (8) mit einer ihm umgebenden Bürstenringdichtung (19) ausgerüstet ist.
